Europäisches Patentamt

European Patent Office

Office européen des brevets

(11) Veröffentlichungsnummer: **0 078 982**
**A1**

(12) # EUROPÄISCHE PATENTANMELDUNG

(21) Anmeldenummer: 82109912.4

(22) Anmeldetag: 27.10.82

(51) Int. Cl.³: **H 02 K 7/06**
**F 16 K 31/04**

(30) Priorität: 07.11.81 DE 3144280

(43) Veröffentlichungstag der Anmeldung:
18.05.83 Patentblatt 83/20

(84) Benannte Vertragsstaaten:
DE FR GB IT

(71) Anmelder: ROBERT BOSCH GMBH
Postfach 50
D-7000 Stuttgart 1(DE)

(72) Erfinder: Hesse, Horst, Dr.Dipl.-Ing.
Auberlenweg 13b
D-7000 Stuttgart 1(DE)

(72) Erfinder: Weigle, Dieter, Dipl.-Ing.
Breitensteinstrasse 6
D-7432 Urach(DE)

(54) **Elektro-mechanischer Stellantrieb.**

(57) Der Stellantrieb verfügt über einen Elektromotor (10), der über eine Schlupfkupplung (11) ein nicht selbsthemmendes Getriebe (12) antreibt. Dessen eine geradlinige Bewegung ausführende Ausgangsglied (13) kann durch Federn (14, 15) beispielsweise bei Motorausfall infolge der Nichtselbsthemmung des Getriebes (12) in eine festgelegte Mittelstellung zurückgeführt werden. Ein derartiger Stellantrieb arbeitet proportional, d.h. der Stellweg des Ausgangsglieds ist proportional der Motorspannung.

EP 0 078 982 A1

Croydon Printing Company Ltd.

R. 17434
27.10.1981 Wd/Wl

ROBERT BOSCH GMBH, 7000 Stuttgart 1

## Elektro-mechanischer Stellantrieb

### Stand der Technik

Die Erfindung geht aus von einem elektro-mechanischen
Stellantrieb nach der Gattung des Hauptanspruchs. Derartige Stellantriebe arbeiten üblicherweise wegintegrierend im Ein-/Ausbetrieb. Bei Stromausfall (Motorstillstand) wird die momentane Stellung beibehalten.
Für solche Fälle, in denen eine bestimmte Forderung
bezüglich der Stellung des zu betätigenden Gliedes
notwendig ist, sind derartige Antriebe nicht geeignet.

### Vorteile der Erfindung

Der erfindungsgemäße Stellantrieb mit den kennzeichnenden Merkmalen des Hauptanspruchs hat demgegenüber den
Vorteil, daß dieser proportional arbeitet, d.h. der
Verstellweg ist proportional der Motorspannung, und
bei Stromausfall wird das zu betätigende Glied in eine
festgelegte Stellung, z.B. Mittelstellung zurückgeführt.

. . .

Zeichnung

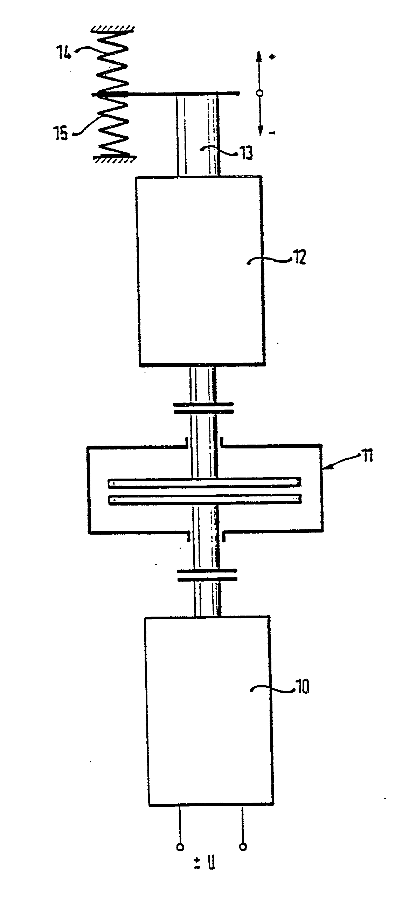

Ein Ausführungsbeispiel der Erfindung ist in der Zeichnung dargestellt und in der nachfolgenden Beschreibung
näher erläutert. Diese zeigt einen elektro-mechanischen
Stellantrieb in schematischer Darstellung.

Beschreibung des Ausführungsbeispiels

Ein Gleichstrom-Elektromotor 10 treibt über eine Schlupfkupplung 11 ein nicht selbsthemmendes mechanisches Verstellgetriebe an, dessen Ausgangsglied 13 eine geradlinige
Bewegung ausführt. Bei diesem Getriebe kann es sich beispielsweise ganz einfach um eine rotierende Mutter mit als
Steilgewindespindel ausgebildetem Ausgangsglied oder um
ein Zahnrad mit als Zahnstange ausgebildeten Ausgangsglied
handeln. Letzteres wird durch zwei gehäusefest abgestützte
Federn 14, 15 bei nicht betätigtem Elektromotor in einer
festgelegten Mittelstellung zentriert.

Die Schlupfkupplung 11 überträgt das Drehmoment proportional der Antriebsdrehzahl des Elektromotors 10. Die
Stromspannung ergibt dessen Drehzahl, d.h. das Kupplungsmoment und damit die Stellkraft am Ausgangsglied 13 des
Getriebes wird über die Federn 14, 15 in eine bestimmte
Stellung desselben umgesetzt. Durch Ändern der Motordrehrichtung sind beide Verstelleinrichtungen möglich. Bei
Ausfall des Elektromotors wird infolge des nicht selbsthemmenden Getriebes das Ausgangsglied 13 durch die Federn
14, 15 in seine Mittelstellung zurückgeführt bzw. in dieser
zentriert. Dadurch erfüllt man eine sogenannte fail-
safe-Forderung.

. . .

0078982

- 3 -                                    R.17434

Der erfindungsgemäße Stellantrieb arbeitet proprotional,
d.h. der Stellweg ist proportional der Spannung am
Elektromotor. Ein solcher Stellantrieb eignet sich besonders zur Betätigung hydraulischer Ventile.

R. 37434
27.10.1981 Wd/Wl

ROBERT BOSCH GMBH, 7000 Stuttgart 1

Ansprüche

1. Elektro-mechanischer Stellantrieb, dadurch gekennzeichnet, daß ein Elektromotor (10) über eine Schlupfkupplung
(11) ein nicht selbsthemmendes Getriebe (12) antreibt,
dessen eine geradlinige Bewegung ausführendes Ausgangsglied durch Federn (14, 15) in einer vorbestimmten Stellung zentrierbar ist.

2. Antrieb nach Anspruch 1, dadurch gekennzeichnet, daß
der Elektromotor ein Gleichstrommotor ist.

3. Antrieb nach Anspruch 1 und/oder 2, dadurch gekennzeichnet, daß das Ausgangsglied bei Stromausfall durch
die Federn in einer festgelegten Mittelstellung gehalten
bzw. in diese zurückgeführt wird.

# EUROPÄISCHER RECHERCHENBERICHT

**0078982**
Nummer der Anmeldung

EP 82 10 9912

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-1 500 418 (JORDAN CONTROLS) * Seite 2, Zeilen 25-32; Seiten 3-7; Seite 8, Zeilen 1-26; Seite 12, Zeilen 30-32; Seite 13, Zeilen 1-6; Figuren 1-6 * | 1-3 | H 02 K 7/06 F 16 K 31/04 |
| X | DE-B-1 296 697 (BETZING et al.) * Spalte 1, Zeilen 44-68; Spalte 2; Spalte 3, Zeilen 1-31; Figur * | 1,3 | |
| X | DE-A-2 910 725 (KLOSE) * Seite 7, Zeilen 4-8; Seite 10, Zeilen 17-24; Seite 21, Zeilen 1-38; Seite 22, Zeilen 1-3; Figur 4 * | 1,3 | |
| Y | US-A-3 161 074 (KORTHAUS et al.) * Spalte 3, Zeilen 54-64; Spalte 4, Zeilen 3-36; Figur * | 1-3 | RECHERCHIERTE SACHGEBIETE (Int. Cl. 3) H 02 K F 16 K |
| Y | US-A-2 558 098 (PENNOW) * Spalte 2, Zeilen 53-54; Spalte 3, Zeilen 1-75; Spalte 4, Zeilen 1-75; Spalte 5, Zeilen 1-59; Figuren 2-4 * | 1,2 | |

Der vorliegende Recherchenbericht wurde für alle Patentansprüche erstellt.

| Recherchenort DEN HAAG | Abschlußdatum der Recherche 08-02-1983 | Prüfer TIO K.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82